Europäisches Patentamt

European Patent Office

Office européen des brevets

(11) Publication number: **0 418 092 A2**

# EUROPEAN PATENT APPLICATION

(21) Application number: 90310068.3

(51) Int. Cl.⁵: **G02B 3/00**

(22) Date of filing: 14.09.90

(30) Priority: 14.09.89 JP 107833/89

(43) Date of publication of application:
20.03.91 Bulletin 91/12

(84) Designated Contracting States:
**DE DK FR GB NL SE**

(71) Applicant: **Terasaki, Masahiro**
**43, Okimiyacho**
**Edogawa-ku Tokyo(JP)**

(72) Inventor: **Terasaki, Masahiro**
**43, Okimiyacho**
**Edogawa-ku Tokyo(JP)**

(74) Representative: **Baillie, Iain Cameron et al**
**c/o Ladas & Parry Isartorplatz 5**
**W-8000 München 2(DE)**

(54) Bar lens with smaller thickness for greater rate of magnificaton.

(57) A bar lens having a linear lens portion of a cross section in the shape of a convex lens and a leg portion for spacing the linear lens portion from a paper when it is placed on the paper for the purpose of increasing the rate of magnification.

FIG. 3

## BAR LENS WITH SMALLER THICKNESS FOR GREATER RATE OF MAGNIFICATION

### Background of the Invention

#### Field of the invention

The present invention relates to a lens, and more particularly, to a bar lens for magnifying an image in one dimension.

#### Description of the Prior Art

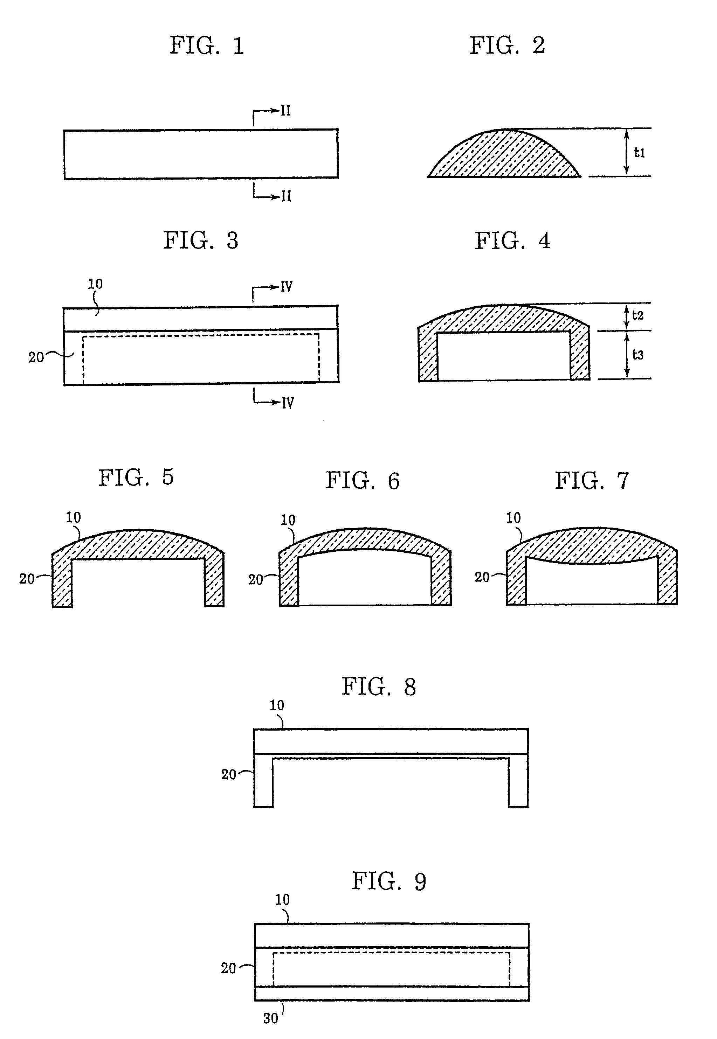

As a means for reading characters and/or figures arranged along a straight line in magnification there is known a bar lens which is a bar of a transparent material having a cross section in the shape of a convex lens. Such a bar lens is generally shaped like a bar having a cross section in the shape of a semicircle as shown in Figs. 1 and 2 of the accompanying drawing so that it is conveniently used as a paperweight to be placed on a paper bearing characters and/or figures. In the drawing, Fig. 1 is a front view of an example of such conventional bar lens, and Fig. 2 is a cross sectional view along line II-II in Fig. 1.

Such bar lenses have been made of glass in old days, and they are now made of also synthetic resins according to the developments thereof.

Although it is possible to substantially decrease the cost of manufacture of such bar lenses by froming them of synthetic resins, particularly more by manufacturing them according to the injection molding, as compared with manufacturing them of glass. However, since the bar lens has such a cross sectional shape of greatly changing its thickness so as to increase from zero at opposite side edges thereof to the maximum at a center thereof, there occurs a relatively large distortion by shrinkage in a body formed by the injection molding when it is cooled down after the molding. Therefore, a delicate and strict control is required with respect to the molding conditions, thus requiring substantial costs for the production in order to obtain high quality bar lenses.

### Summary of the Invention

In view of the above-mentioned problems, it is the object of the present invention to provide high quality bar lenses at moderate molding conditions.

According to the present invention, the above-mentioned object is accomplished by a bar lens comprising a linear lens portion having a cross section in a shape of convex lens and a leg portion for spacing said linear lens portion from a paper.

When the bar lens is constructed as described above so as to comprise a linear lens portion having a cross section in a shape of convex lens and a leg portion for spacing said linear lens portion from a paper, it is possible to space the linear lens portion for a relatively large distance from a paper, so that the rate of magnification available by the linear lens portion is correspondingly increased, whereby the difference in the thickness between the opposite side edge portions and the central portion in the cross sectional shape of a convex lens of the linear lens portion can be decreased as compared with that in the conventional bar lenses, so that the distortion due to shrinkage in the cooling of the resin after the injection molding is correspondingly decreased, thereby making it possible to obtain high quality bar lenses at moderate conditions with respect to the injection molding.

Said leg portion may extend all along the circumference of said linear lens portion, so that the bar lens is more stably placed on a paper.

Said cross section of said linear lens portion may have a concave curvature along an edge thereof facing said leg portion, said concave curvature being of a rate of curvature not to cancel the shape of convex lens of said cross section.

Alternatively, said cross section of said linear lens portion may have a convex curvature along an edge thereof facing said leg portion.

Since the bar lens is placed on a paper to be in contact with the paper at an end of the leg portion remote from the linear lens portion, it does not affect that the lower edge of said cross section has a concave or a convex curvature.

Said leg portion may be provided only along longitudinal opposite edges of said linear lens portion.

Alternatively, said leg portion is provided only at longitudinal opposite ends of said linear lens portion.

Further, a flat transparent plate may be mounted to an end of said leg portion remote from said linear lens portion, so that such a flat plate serves to flatten a fold or wrinkles of a paper on which it is placed.

### Brief Description of the Drawing

In the accompanying drawing,
Fig. 1 is a front view showing an example of the conventional bar lens;
Fig. 2 is a sectional view along line II-II in Fig. 1;
Fig. 3 is a front view showing an embodiment of the bar lens according to the present invention;

Fig. 4 is a sectional view along line IV-IV in Fig. 3;

Figs. 5, 6 and 7 are views similar to Fig. 4 showing three modifications with respect to the embodiment shown in Figs. 3 and 4; and

Figs. 8 and 9 are views similar to Fig. 3 showing other two modifications of the embodiment shown in Figs. 3 and 4.

## Descriptions of the Preferred Embodiments

The present invention will be described with respect to some preferred embodiments thereof with reference to the accompanying drawing.

Referring to Figs. 3 and 4 showing an embodiment of the bar lens according to the present invention in a manner convenient for comparison thereof with the conventional bar lens shown in Figs. 1 and 2, the bar lens comprises a linear lens portion 10 in the shape of a convex lens and a leg portion 20 extending along the full circumference of the linear lens portion, both portions being formed to be integral with one another by the injection molding. As illustrated in Fig. 4, when the bar lens according to this embodiment should provide the same rate of magnification as available by the conventional lens shown in Figs. 1 and 2, the maximum thickness of the linear lens portion can be decreased from a thickness such as $t1$ in the conventional linear lens to a less thickness such as $t2$, while the linear lens portion 10 is adapted to be spaced from a paper by the leg portions 20 for a distance corresponding to a height $t3$ of the leg portion so as to compensate for the reduction in the rate of magnification of the linear lens portion.

Fig. 5 is a sectional view similar to Fig. 4, showing another embodiment which is a partial modification of the embodiment shown in Figs. 3 and 4. In this embodiment, the leg portion 20 is provided only along the opposite side edges of the linear lens portion 10 extending in the longitudinal direction thereof.

Fig. 6 is a sectional view similar to Fig. 4, showing still another embodiment which is still another partial modification of the embodiment shown in Figs. 3 and 4. In this embodiment, the sectional shape of the linear lens portion 10 has also a curvature along the lower edge thereof as viewed in the figure so as to be slightly concave at a rate of curvature less than that of the upper edge thereof, so that the difference between the upper and lower curvatures provides the function of a convex lens.

Fig. 7 is again a sectional view similar to Fig. 4, showing still another embodiment which is still another partial modification of the embodiment shown in Figs. 3 and 4. In this embodiment, the sectional shape of the linear lens portion 10 is modified to have a convex curvature along the lower edge thereof, wherein the function of the convex lens is provided by the addition of the upper and lower convex curvatures.

Fig. 8 is a front view similar to Fig. 3, showing still another embodiment which is also still another partial modification of the embodiment shown in Figs. 3 and 4. In this embodiment, the leg portion 20 is provided only at the opposite ends of the linear lens portion 10.

Fig. 9 is again a front view similar to Fig. 3, showing still another embodiment which is also still another modification of the embodiment shown in Figs. 3 and 4. In this embodiment, a flat transparent plate member 30 is mounted to the open end of the leg portion 20 so that, when the bar lens is placed on a paper, it will serve to flatten the paper just as the conventional bar lens does. This embodiment is suited for use with a paper having a fold or wrinkles.

Although the bodies in the embodiments or modifications shown in Figs. 3-8 and the body excluding the transparent plate 30 in the embodiment shown in Fig. 9 are described in the above and illustrated in the drawing as being an integral body made of a transparent resin, it is not necessary that these bodies are to be so integrally formed. The linear lens portion and the leg portion may be separately formed by the injection molding, so as to be combined thereafter by an adhesive or a thermal binding.

Thus, according to the present invention, a bar lens having a certain rate of magnification is available with a less thickness in the sectional shape of a convex lens than the conventional one providing the same rate of magnification. Therefore, the conditions with respect to the injection molding of a synthetic resin in the manufacture of the bar lenses can be substantially moderated, thereby lessening the costs of manufacture of these products.

Although the invention has been described with respect to some preferred embodiments thereof, it will be apparent to those skilled in the art that various modifications are possible without departing from the spirit of the present invention.

## Claims

1. A bar lens comprising a linear lens portion having a cross section in a shape of convex lens and a leg portion for spacing said linear lens portion from a paper.

2. A bar lens according to claim 1, wherein said leg portion extends all along the circumference of said linear lens portion.

3. A bar lens according to claim 1, wherein said cross section of said linear lens portion has a concave curvature along an edge thereof facing said leg portion, said concave curvature being of a rate of curvature not to cancel the shape of convex lens of said cross section.

4. A bar lens according to claim 1, wherein said cross section of said linear lens portion has a convex curvature along an edge thereof facing said leg portion.

5. A bar lens according to claim 1, wherein said leg portion is provided only along longitudinal opposite edges of said linear lens portion.

6. A bar lens according to claim 1, wherein said leg portion is provided only at longitudinal opposite ends of said linear lens portion.

7. A bar lens according to claim 1, further comprising a flat transparent plate mounted to an end of said leg portion remote from said linear lens portion.

FIG. 1

FIG. 2

FIG. 3

FIG. 4

FIG. 5

FIG. 6

FIG. 7

FIG. 8

FIG. 9